# EUROPÄISCHE PATENTSCHRIFT

(11) **EP 4 483 692 B1**
(45) Veröffentlichungstag und Bekanntmachung des Hinweises auf die Patenterteilung: **10.06.2026**
(21) Anmeldenummer: 24168622.9
(22) Anmeldetag: 05.04.2024
(51) Int. Cl.: A01B 69/00, A01B 69/04

(54) **LANDWIRTSCHAFTLICHE ARBEITSMASCHINE**
AGRICULTURAL MACHINE
MACHINE AGRICOLE

(30) Priorität: 27.06.2023 DE 102023116885
(43) Veröffentlichungstag der Anmeldung: 01.01.2025
(73) Patentinhaber: CLAAS E-Systems GmbH, 49201 Dissen (DE)
(72) Erfinder: Uhlemann, Matthias, 49326 Melle (DE); Behmenburg, Jan, 58730 Fröndenberg (DE); Monkenbusch, Robin, 33378 Rheda-Wiedenbrück (DE); Hemsen, Moritz, 59872 Meschede (DE); Meyer zu Helligen, Lars Peter, 32139 Spenge (DE); Schoch, Bernd, 33334 Gütersloh (DE); Kruse, Alexander, 33818 Leopoldshöhe (DE)
(74) Vertreter: CLAAS Gruppe

(56) Entgegenhaltungen:
- DE-A1- 102005 008 105
- DE-A1- 102006 019 216
- DE-A1- 102017 103 144
- US-B2- 9 974 225

## Beschreibung

Die vorliegende Erfindung betrifft eine landwirtschaftliche Arbeitsmaschine zum landwirtschaftlichen Einsatz auf einem landwirtschaftlichen Feld, welches einen Feldbereich und einen Vorgewendebereich aufweist.

In der modernen Landwirtschaft mit mehreren und/oder unterschiedlichen landwirtschaftlichen Arbeitsmaschinen mehrere unterschiedliche landwirtschaftlichen Felder bearbeitet, wobei vor dieser Bearbeitung die Feldbereiche und die Vorgewendebereich durch den Landwirt festgelegt werden.

Aus der US 9,974,225 B2 ist ein Verfahren zur Erzeugung eines nicht kontinuierlichen Krümmungsendkurvenwegs für ein landwirtschaftliches Fahrzeug bekannt, wobei der nicht kontinuierliche Krümmungsendkurvenweg eine Vielzahl von Anfangssegmenten umfasst, die gekrümmt oder gerade sind, wobei mindestens ein Kontinuitätssegment zwischen jedem der Anfangssegmente hinzugefügt wird, wobei das mindestens eine Kontinuitätssegment ein Klothoiden-Segment ist und die anfänglichen Segmente und das mindestens eine Kontinuitätssegment kombiniert werden, um einen kontinuierlichen Krümmungs-Wendepfad am Ende der Reihe zu bilden und anzuzeigen.

Gemäß der US 9,974,225 B2 wird zwar lokal, also während der Fahrt auf dem landwirtschaftlichen Feld, die Erzeugung eines nicht kontinuierlichen Krümmungsendkurvenweges für ein landwirtschaftliches Fahrzeug bezüglich des Vorgewendes ermöglicht, jedoch kann diese Erzeugung beispielweise dazu führen, dass plötzlich Feldbereiche und/oder Vorgewendebereiche des landwirtschaftlichen Felder verwendet werden, die nicht den Feldbereichen und/oder Vorgewendebereichen entsprechen, die durch den Landwirt vor dieser Bearbeitung festgelegt wurden.

Der vorliegenden Erfindung liegt die Aufgabe zugrunde, eine verbesserte landwirtschaftliche Arbeitsmaschine anzugeben, die den Landwirt vorhergehend geplanten Bearbeitung des landwirtschaftlichen Feldes unterstützt, wobei insbesondere einer unterwünschten und/oder einer unpassenden Fahrt auf dem landwirtschaftlichen Feld entgegenwirkt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass eine Einstellvorrichtung in Abhängigkeit einer vorgegebenen Positionierung des Vorgewendebereiches und vorgegebenen Abmessungen des Vorgewendebereiches wenigstens eine Vorgewendefahrspur ermittelt und die landwirtschaftliche Arbeitsmaschine basierend auf der ermittelten Vorgewendefahrspur einstellt.

Die erfindungsgemäße landwirtschaftliche Arbeitsmaschine ist zum landwirtschaftlichen Einsatz auf einem landwirtschaftlichen Feld ausgebildet, welches wenigstens einen Feldbereich und wenigstens einen Vorgewendebereich aufweist. Diese landwirtschaftliche Arbeitsmaschine weist wenigstens ein Anbaugerät zur Bearbeitung des Feldbereiches des landwirtschaftlichen Feldes auf. Die landwirtschaftliche Arbeitsmaschine kann als ein selbstfahrender Mähdrescher mit einem Anbaugerät in Form eines Vorgerätes oder als selbstfahrender Feldhäcksler mit einem Anbaugerät in Form eines Vorgerätes ausgebildet sein. Die landwirtschaftliche Arbeitsmaschine kann als ein Traktor mit wenigstens einem frontseitigen Anbaugerät und/oder mit wenigstens einem heckseitigen Anbaugerät ausbilden sein.

Innerhalb der landwirtschaftlichen Arbeitsmaschine ist eine Einstellvorrichtung angeordnet, die dazu vorgesehen und eingerichtet ist, die landwirtschaftliche Arbeitsmaschine in Abhängigkeit messtechnisch erfasster Betriebsparameter und satellitenbasierten Positionsinformationen derart einzustellen, dass die landwirtschaftliche Arbeitsmaschine innerhalb des Feldbereiches mehrere Fahrspuren abfährt, wobei zwei dieser Fahrspuren jeweils mittels einer zu ermittelnden Vorgewendefahrspur innerhalb des Vorgewendebereiches miteinander verbindbar sind. Unter eingerichtet kann zu verstehen sein, dass die Einstellvorrichtung dazu ausgebildet und/oder programmiert ist.

Die Einstellvorrichtung kann als Steuer- und/oder Regelvorrichtung ausgebildet sein, die eine Einstellung durch eine Steuerung und/oder Regelung der landwirtschaftlichen Arbeitsmaschine, insbesondere von Komponenten der landwirtschaftlichen Arbeitsmaschine, bewirkt. Die Einstellvorrichtung kann eine Rechenvorrichtung und einen Datenspeicher aufweisen.

Die landwirtschaftliche Arbeitsmaschine kann wenigstens eine Messeinrichtung zur messtechnischen Erfassung des Betriebsparameters der landwirtschaftlichen Arbeitsmaschine, insbesondere von Komponenten der landwirtschaftlichen Arbeitsmaschine und/oder der Umgebung der landwirtschaftlichen Arbeitsmaschine, aufweisen. Die Messeinrichtung kann Sensoreinrichtung aufweisen.

Die landwirtschaftliche Arbeitsmaschine kann eine Positionsbestimmungseinrichtung zur satellitenbasierten Erfassung einer Position der landwirtschaftlichen Arbeitsmaschine bezüglich des landwirtschaftlichen Feldes aufweisen, um die satellitenbasierten Positionsinformationen zu erfassen. Die Positionsbestimmungseinrichtung kann zur Positionsbestimmung mittels Satellitennavigationssignalen ausgebildet und/oder programmiert sein, um beispielsweise Positionsdaten bereitstellen. Hierbei kann wenigstens eine Satellitenvorrichtung zur Positionsbestimmung der landwirtschaftlichen Arbeitsmaschine bezüglich landwirtschaftlichen Feldes eingesetzt werden. Die Satellitenvorrichtung kann einen und/oder mehrere GNSS-Satelliten umfassen. Die Satellitenvorrichtung kann NAVSTAR-GPS-, GLON-ASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position der landwirtschaftlichen Arbeitsmaschine auf dem landwirtschaftlichen Feld zu ermitteln. Hierbei kann die stationäre Bodenstation außerhalb des landwirtschaftlichen Feldes angeordnet sein.

In der Einstellvorrichtung ist datentechnisch, insbesondere im internen Datenspeicher, zumindest das nachfolgende hinterlegt: eine vorgegebene Positionierung des Vorgewendebereiches innerhalb des landwirtschaftlichen Feldes, vorgegebene Abmessungen dieses Vorgewendebereiches, vorgegebene Fahrspuren innerhalb des Feldbereiches und Arbeitsmaschinenparameter bezüglich des Anbaugeräts. Diese datentechnisch hinterlegten Daten und/oder Informationen können vor einer Bearbeitung des landwirtschaftlichen Feldes datentechnisch in der Einstellvorrichtung hinterlegt worden sein. Die datentechnische Hinterlegung relevanter Daten kann in Verbindung mit den satellitenbasierten Positionsinformationen und/oder messtechnisch erfasste Betriebsparameter erfolgen.

Die Einstellvorrichtung ist dazu vorgesehen und eingerichtet, wenigstens eine Vorgewendefahrspur in Abhängigkeit der messtechnisch erfassten Betriebsparameter, der satellitenbasierten Positionsinformationen, dem Arbeitsmaschinenparameter bezüglich des Anbaugeräts, der vorgegebenen Fahrspuren, der vorgegebenen Positionierung und vorgegebenen Abmessungen des Vorgewendebereiches zu ermitteln und die landwirtschaftliche Arbeitsmaschine basierend auf der ermittelten Vorgewendefahrspur einzustellen.

Hierdurch wird der Landwirt bezüglich seiner vorhergehend geplanten Bearbeitung des landwirtschaftlichen Feldes derart unterstützt, dass insbesondere einer unterwünschten und/oder einer unpassenden Fahrt auf dem landwirtschaftlichen Feld entgegenwirkt wird.

Bei einer vorteilhaften Weiterbildung der erfindungsgemäßen Lösung ist vorgesehen, dass der Arbeitsmaschinenparameter bezüglich des Anbaugeräts die Anzahl der Anbaugeräte der landwirtschaftlichen Arbeitsmaschine aufweist, und/oder dass der Arbeitsmaschinenparameter bezüglich des Anbaugeräts die Art und/oder die Ausgestaltung des Anbaugeräts der landwirtschaftlichen Arbeitsmaschine aufweist. Die Anbaugeräts die Art und/oder die Ausgestaltung des Anbaugeräts kann sich auf geometrische Abmessungen des Anbaugeräts und/oder Betriebsarten des Anbaugeräts beziehen.

Bei einer vorteilhaften Weiterbildung der erfindungsgemäßen Lösung ist vorgesehen, dass der Arbeitsmaschinenparameter bezüglich des Anbaugeräts aufweist, ob das Anbaugerät als ein fronseitiges Anbaugerät oder ein heckseitiges Anbaugerät ausgebildet ist, wobei die Einstellvorrichtung dazu vorgesehen und eingerichtet ist, falls die landwirtschaftliche Arbeitsmaschine gemäß dem Arbeitsmaschinenparameter wenigstens ein heckseitiges Anbaugerät aufweist, dass bei der Ermittlung der Vorgewendefahrspur lediglich Vorgewendefahrspuren betrachtet werden, die ausschließlich ein Vorwärtsfahren der landwirtschaftlichen Arbeitsmaschine und kein Rückwärtsfahren der landwirtschaftlichen Arbeitsmaschine aufweisen.

Bei einer vorteilhaften Weiterbildung der erfindungsgemäßen Lösung ist vorgesehen, dass die landwirtschaftliche Arbeitsmaschine eine Fahrerkabine für einen Fahrer der landwirtschaftlichen Arbeitsmaschine aufweist, wobei in der Fahrerkabine eine interne Benutzerschnittstelle derart ausgebildet ist, dass der Fahrer zwar eine beliebige Vorgewendefahrspur einstellen kann, wobei die Einstellvorrichtung jedoch dazu vorgesehen und eingerichtet ist, die interne Benutzerschnittstelle derart einzustellen, dass dem Fahrer die ermittelte Vorgewendefahrspur zur Auswahl dargestellt wird. Die interne Benutzerschnittstelle kann ein Display bzw. einen Bildschirm aufweisen, um dem Fahrer die ermittelte Vorgewendefahrspur zur Auswahl optisch sichtbar darzustellen. Hierdurch wird dem Fahrer der optimale Betrieb der landwirtschaftlichen Arbeitsmaschine einfach und intuitiv ermöglicht. Die Benutzerschnittstelle kann sensorbasierend eine Berührung des Displays erfassen, um eine Auswahl der Vorgewendefahrspur zu ermitteln.

Bei einer vorteilhaften Weiterbildung der erfindungsgemäßen Lösung ist vorgesehen, dass die Einstellvorrichtung dazu vorgesehen und eingerichtet ist, die interne Benutzerschnittstelle derart einzustellen, dass dem Fahrer mehrere ermittelte Vorgewendefahrspuren zur Auswahl dargestellt werden. Hierdurch kann der Fahrer eine dieser ermittelten Vorgewendefahrspuren auswählen.

Bei einer vorteilhaften Weiterbildung der erfindungsgemäßen Lösung ist vorgesehen, dass in der Fahrerkabine eine interne Benutzerschnittstelle derart ausgebildet ist, dass der Fahrer zwar einen beliebigen Vorgewendebereiches innerhalb des landwirtschaftlichen Feldes und beliebige Abmessungen dieses Vorgewendebereiches bezüglich des landwirtschaftlichen Feldes einstellen kann, wobei jedoch die Einstellvorrichtung dazu vorgesehen und eingerichtet ist, die interne Benutzerschnittstelle derart einzustellen, dass dem Fahrer die vorgegebene Positionierung des Vorgewendebereiches innerhalb des landwirtschaftlichen Feldes und die vorgegebenen Abmessungen dieses Vorgewendebereiches zur Auswahl, insbesondere optisch sichtbar mittels des Displays, dargestellt wird.

Bei einer vorteilhaften Weiterbildung der erfindungsgemäßen Lösung ist vorgesehen, dass die Einstellvorrichtung dazu vorgesehen und eingerichtet ist, die vor einer Abschaltung der landwirtschaftlichen Arbeitsmaschine zuletzt verwendete Vorgewendefahrspur datentechnisch zu speichern und bei einem Einschalten der landwirtschaftlichen Arbeitsmaschine die interne Benutzerschnittstelle derart einzustellen, dass dem Fahrer zusätzlich zu einer ermittelten Vorgewendefahrspur die zuletzt verwendete Vorgewendefahrspur, insbesondere die zuletzt verwendete Vorgewendefahrspur bezüglich des landwirtschaftlichen Feldes, auf dem sich die landwirtschaftlichen Arbeitsmaschine befindet, zur Auswahl, insbesondere optisch sichtbar mittels des Displays, dargestellt wird.

Bei einer vorteilhaften Weiterbildung der erfindungsgemäßen Lösung ist vorgesehen, dass die Einstellvorrichtung dazu vorgesehen und eingerichtet ist, die interne Benutzerschnittstelle derart einzustellen, dass dem Fahrer zusätzlich zu der Auswahl der mehreren Vorgewendefahrspuren jeweils eine zusätzliche Information bezüglich der auswählbaren Vorgewendefahrspur, insbesondere optisch sichtbar mittels des Displays, darstellt wird.

Bei einer vorteilhaften Weiterbildung der erfindungsgemäßen Lösung ist vorgesehen, dass die zusätzliche Information bezüglich der Vorgewendefahrspuren die Flächengröße des Vorgewendebereiches und/oder die Länge der Vorgewendefahrspuren betrifft. Hierdurch wird dem Fahrer eine optimale Auswahl der Vorgewendefahrspur ermöglicht.

Bei einer vorteilhaften Weiterbildung der erfindungsgemäßen Lösung ist vorgesehen, dass die landwirtschaftliche Arbeitsmaschine eine externe Benutzerschnittstelle außerhalb der landwirtschaftlichen Arbeitsmaschine für einen Landwirt aufweist, wobei die Einstellvorrichtung dazu vorgesehen und eingerichtet ist, die externe Benutzerschnittstelle derart einzustellen, dass dem Landwirt ein Hinweis dargestellt wird, falls eine von der Einstellvorrichtung ermittelte Vorgewendefahrspur nicht verwendet wird und der Fahrer eine andere Vorgewendefahrspur einstellt.

Die externe Benutzerschnittstelle und die Einstellvorrichtung können miteinander kommunizierend verbunden sind. Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Bei einer vorteilhaften Weiterbildung der erfindungsgemäßen Lösung ist vorgesehen, dass die ermittelte Vorgewendefahrspur eine Ω-förmige Vorgewendefahrspur ausbildet, und/oder dass die ermittelte Vorgewendefahrspur eine U-förmige Vorgewendefahrspur ausbildet, und/oder dass die ermittelte Vorgewendefahrspur eine Y-förmige Vorgewendefahrspur ausbildet, und/oder dass die ermittelte Vorgewendefahrspur eine K-förmige Vorgewendefahrspur ausbildet. Die Ω-förmige und U-förmige Vorgewendefahrspur weisen im Gegensatz zur Y-förmigen und K-förmigen Vorgewendefahrspur kein Rückwärtsfahren der landwirtschaftlichen Arbeitsmaschine auf. Eine Ω-förmige Vorgewendefahrspur kann Keyhole-Turn bezeichnet werden.

Bei einer vorteilhaften Weiterbildung der erfindungsgemäßen Lösung ist vorgesehen, dass der messtechnisch erfasste Betriebsparameter eine Erntegutinformation, eine Wetterinformation, eine Standortinformation, einen weiteren Arbeitsmaschinenparameter und/oder einen Betriebszustand der landwirtschaftlichen Arbeitsmaschine betrifft.

Bei einer vorteilhaften Weiterbildung der erfindungsgemäßen Lösung ist vorgesehen, dass die Einstellvorrichtung dazu vorgesehen und eingerichtet ist, in Abhängigkeit der ermitteln Vorgewendefahrspur wenigstens ein Anbaugerät einzustellen.

Bei einer vorteilhaften Weiterbildung der erfindungsgemäßen Lösung ist vorgesehen, dass die Einstellvorrichtung dazu vorgesehen und eingerichtet ist, in Abhängigkeit der ermitteln Vorgewendefahrspur wenigstens ein frontseitiges Anbaugerät und/oder ein heckseitiges Anbaugerät einzustellen.

Bei einer vorteilhaften Weiterbildung der erfindungsgemäßen Lösung ist vorgesehen, dass die Einstellvorrichtung dazu vorgesehen und eingerichtet ist, in Abhängigkeit der ermitteln Vorgewendefahrspur wenigstens ein Anbaugerät teilweise, insbesondere teilweise asynchron, einzustellen, und/oder dass die Einstellvorrichtung dazu vorgesehen und eingerichtet ist, in Abhängigkeit der ermitteln Vorgewendefahrspur wenigstens ein frontseitiges Anbaugerät asynchron zu einem heckseitigen Anbaugerät einzustellen. Unter einer asynchronen Einstellung kann zu verstehen sein, dass eine erste Einstellung eines ersten Teils der landwirtschaftlichen Arbeitsmaschine zu einem ersten Zeitpunkt und eine weitere Einstellung eines weiteren Teils der landwirtschaftlichen Arbeitsmaschine zu einem weiteren Zeitpunkt erfolgt.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine perspektivische Seitenansicht auf eine erfindungsgemäße landwirtschaftliche Arbeitsmaschine während einer Geradeausfahrt in einem Feldbereich, und
- Fig. 2: eine Draufsicht auf die erfindungsgemäße landwirtschaftliche Arbeitsmaschine während einer Geradeausfahrt im Feldbereich, und
- Fig. 3: eine Draufsicht auf mehrere mögliche Vorgewendefahrrouten.

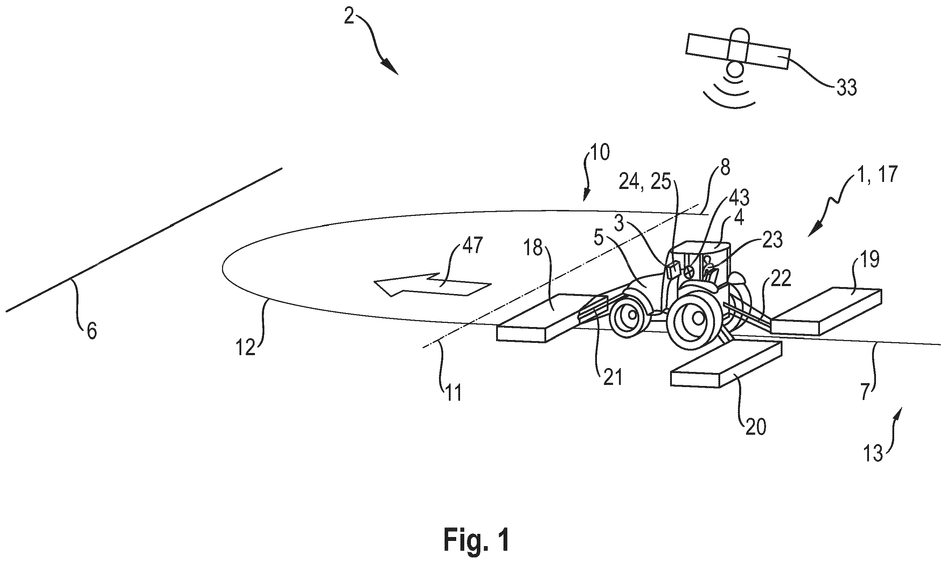

Die Fig. 1 zeigt eine perspektivische Seitenansicht einer landwirtschaftlichen Arbeitsmaschine 1 während eines landwirtschaftlichen Einsatzes auf einem landwirtschaftlichen Feld 2, welches von Feldgrenzen 6 begrenzt ist, innerhalb derer wenigstens ein Feldbereich 13 und wenigstens einen Vorgewendebereich 10 ausgebildet ist. Der Feldbereich 13 und der Vorgewendebereich 10 sind symbolisch durch eine Zwischengrenze 11 voneinander getrennt angedeutet dargestellt.

Die landwirtschaftliche Arbeitsmaschine 1 ist beispielhaft durch einen Traktor 17 ausgebildet, der ein frontseitiges Anbaugerät 18 und zwei hinterseitige Anbaugeräte 19, 20 umfasst. Diese landwirtschaftliche Arbeitsmaschine 1 weist einen Verbrennungsmotor 5 auf, der die landwirtschaftliche Arbeitsmaschine 1 entlang einer Vorwärtsfahrrichtung 47 derart geradeaus antreibt, dass die landwirtschaftliche Arbeitsmaschine 1 entlang einer Fahrspur 7 fährt, um eine Bearbeitung des Feldbereiches 13 des landwirtschaftlichen Feldes 2 zu erzielen und sich dabei der Zwischengrenze 11 und dem Vorgewendebereich 10 nähert. Das frontseitige Anbaugerät 18 ist bezüglich der Vorwärtsfahrrichtung 47 vor dem Verbrennungsmotor 5 positioniert, während die hinterseitigen Anbaugeräte 19, 20 bezüglich der Vorwärtsfahrrichtung 47 hinter dem Verbrennungsmotor 5 angeordnet sind. Die zwei hinterseitigen Anbaugeräte 19, 20 können quer zur Vorwärtsfahrrichtung 47 voneinander beabstandet ausgebildet sein. Alternativ oder zusätzlich kann das hinterseitige Anbaugeräte als mehrteiliges Anbaugerät 19, 20 ausgebildet sein.

Die landwirtschaftliche Arbeitsmaschine 1 weist ein Fronthubwerk 21 zur Höhenpositionierung des frontseitigen Anbaugerätes 18 bezüglich des landwirtschaftlichen Feldes 2 auf. Dieses Fronthubwerk 21 kann als hydraulisches Fronthubwerk ausgebildet sein. Ferner weist die landwirtschaftliche Arbeitsmaschine 1 eine Heckkopplung 22 auf, um die heckseitigen Anbaugerät 19, 20 mit dem Traktor 17 zu koppeln.

Die landwirtschaftliche Arbeitsmaschine 1 weist eine Fahrerkabine 4 mit einer Lenkvorrichtung 43 für einen Fahrer 23 der landwirtschaftlichen Arbeitsmaschine 1 auf, wobei in dieser Fahrerkabine 4 eine interne Benutzerschnittstelle 24 derart ausgebildet ist, dass der Fahrer 23 eine Vorgewendefahrspur 12 einstellen kann, welche die landwirtschaftliche Arbeitsmaschine 1 im Vorgewendebereich 10 abfährt, um in eine weitere nächstliegende Fahrspur 8 des Feldbereiches 13 zu erreichen.

Die landwirtschaftliche Arbeitsmaschine 1 ist dazu vorgesehen und ausgebildet, mittels wenigstens einem Satelliten 33 eine satellitenbasierte Positionsinformationen bezüglich der Position der landwirtschaftliche Arbeitsmaschine 1 innerhalb des landwirtschaftlichen Feldes 2 zu ermitteln.

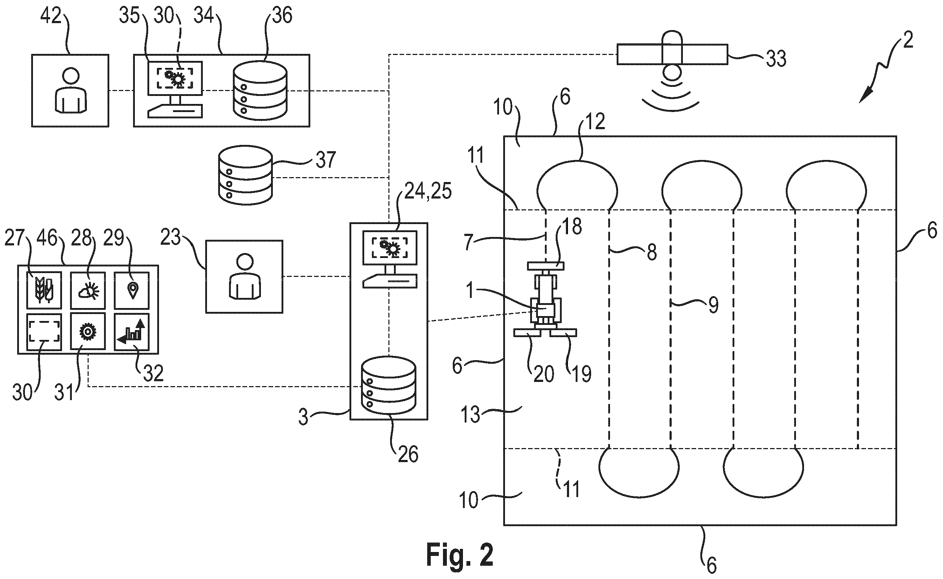

Wie in der Fig. 1 angedeutet, ist innerhalb der landwirtschaftlichen Arbeitsmaschine 1 eine Einstellvorrichtung 3 ausgebildet und angeordnet, wobei diese Einstellvorrichtung 3 nachfolgend anhand der Fig. 2 erläutert wird.

Die Einstellvorrichtung 3 ist dazu vorgesehen und eingerichtet, die landwirtschaftliche Arbeitsmaschine 1 in Abhängigkeit messtechnisch erfasster Betriebsparameter und satellitenbasierten Positionsinformationen derart einzustellen, dass die landwirtschaftliche Arbeitsmaschine 1 innerhalb des Feldbereiches 13 mehrere Fahrspuren 7, 8, 9 abfährt, wobei zwei dieser Fahrspuren 7, 8, 9 jeweils mittels einer zu ermittelnden Vorgewendefahrspur 12 innerhalb des Vorgewendebereiches 10 miteinander verbindbar sind.

Einer oder mehrere messtechnisch erfasste Betriebsparameter können in Form eines Datensatzes 46 im internen Datenspeicher 26 und/oder einem weiteren externen Datenspeicher 37 hinterlegt sein und Erntegutinformation 27, eine Wetterinformation 28, eine Standortinformation 29, einen weiteren Arbeitsmaschinenparameter 31 und/oder einen Betriebszustand 32 der landwirtschaftlichen Arbeitsmaschine 1 betreffen.

In der Einstellvorrichtung 3 ist datentechnisch, z.B. im internen Datenspeicher 26 innerhalb der landwirtschaftliche Arbeitsmaschine 1, eine vorgegebene Positionierung des Vorgewendebereiches 10 innerhalb des landwirtschaftlichen Feldes 2, vorgegebene Abmessungen dieses Vorgewendebereiches 10, vorgegebene Fahrspuren 7, 8, 9 innerhalb des Feldbereiches 13 und Arbeitsmaschinenparameter bezüglich des Anbaugeräts 18, 19, 20 hinterlegt.

Die Einstellvorrichtung 3 ist dazu vorgesehen und eingerichtet, wenigstens eine Vorgewendefahrspur 12 in Abhängigkeit der messtechnisch erfassten Betriebsparameter, der satellitenbasierten Positionsinformationen, dem Arbeitsmaschinenparameter bezüglich des Anbaugeräts 18, 19, 20, der vorgegebenen Fahrspuren 7, 8, 9, der vorgegebenen Positionierung und vorgegebenen Abmessungen des Vorgewendebereiches 10 zu ermitteln und die landwirtschaftliche Arbeitsmaschine 1 basierend auf der ermittelten Vorgewendefahrspur 12 einzustellen, insbesondere zu steuern und/oder zu regeln.

Der Arbeitsmaschinenparameter kann die Anzahl der Anbaugeräte 18, 19, 20 und/oder die Art und/oder die Ausgestaltung des Anbaugeräts 18, 19, 20 betreffen. Mittels der Arbeitsmaschinenparameter bezüglich des Anbaugeräts 18, 19, 20 kann erfasst werden, ob das Anbaugerät 18, 19, 20 ein fronseitiges Anbaugerät 18 oder ein heckseitiges Anbaugerät 19, 20 ist, wobei die Einstellvorrichtung 3 dazu vorgesehen und eingerichtet ist, falls die landwirtschaftliche Arbeitsmaschine 1 gemäß dem Arbeitsmaschinenparameter wenigstens ein heckseitiges Anbaugerät 19, 20 aufweist, dass bei der Ermittlung der Vorgewendefahrspur 12 lediglich Vorgewendefahrspuren 12 betrachtet werden, die ausschließlich ein Vorwärtsfahren der landwirtschaftlichen Arbeitsmaschine 1 aufweisen. Dies kann beispielweise eine Ω-förmige Vorgewendefahrspur (12) und/oder eine U-förmige Vorgewendefahrspur sein.

Die Einstellvorrichtung 3 kann dazu vorgesehen und eingerichtet sein, die interne Benutzerschnittstelle 24, die ein internes Display 25 aufweist, derart einzustellen, dass dem Fahrer 23 wenigstens eine oder mehrere ermittelte Vorgewendefahrspuren 12 zur Auswahl dargestellt werden.

Die in der Fahrerkabine 4 interne Benutzerschnittstelle 24 kann derart zusätzlich ausgebildet sein, dass der Fahrer 23 einen beliebigen Vorgewendebereiches 10 innerhalb des landwirtschaftlichen Feldes 2 und beliebige Abmessungen dieses Vorgewendebereiches 10 bezüglich des landwirtschaftlichen Feldes 2 einstellen kann, wobei die Einstellvorrichtung 3 dazu vorgesehen und eingerichtet ist, die interne Benutzerschnittstelle 24 derart einzustellen, dass dem Fahrer 23 die vorgegebene Positionierung des Vorgewendebereiches 10 innerhalb des landwirtschaftlichen Feldes 2 und die vorgegebenen Abmessungen dieses Vorgewendebereiches 10 zur Auswahl dargestellt wird.

Die Einstellvorrichtung 3 kann dazu vorgesehen und eingerichtet sein, die vor einer Abschaltung der landwirtschaftlichen Arbeitsmaschine 1 zuletzt verwendete Vorgewende-fahrspur 12 datentechnisch zu speichern und bei einem Einschalten der landwirtschaftlichen Arbeitsmaschine 1 die interne Benutzerschnittstelle 24 derart einzustellen, dass dem Fahrer 23 zusätzlich zu einer ermittelten Vorgewendefahrspur 12 auch die zuletzt verwendete Vorgewendefahrspur 12 zur Auswahl dargestellt wird.

Die landwirtschaftliche Arbeitsmaschine 1 weist eine externe Benutzerschnittstelle 34 auf, die außerhalb der landwirtschaftlichen Arbeitsmaschine 1 für einen Landwirt 42 ausgebildet ist und ein externes Display 35 und einen externen Datenspeicher 36 aufweist, wobei die Einstellvorrichtung 3 dazu vorgesehen und eingerichtet ist, diese externe Benutzerschnittstelle 34 derart einzustellen, dass dem Landwirt 42 ein Hinweis dargestellt wird, falls eine von der Einstellvorrichtung 3 ermittelte Vorgewendefahrspur 12 nicht verwendet wird und der Fahrer 23 eine andere Vorgewendefahrspur 12 einstellt. Hierfür können die externe Benutzerschnittstelle 34 und die Einstellvorrichtung 3 mittels wenigstens einer drahtlosen Datenverbindung miteinander kommunizierend verbunden sein.

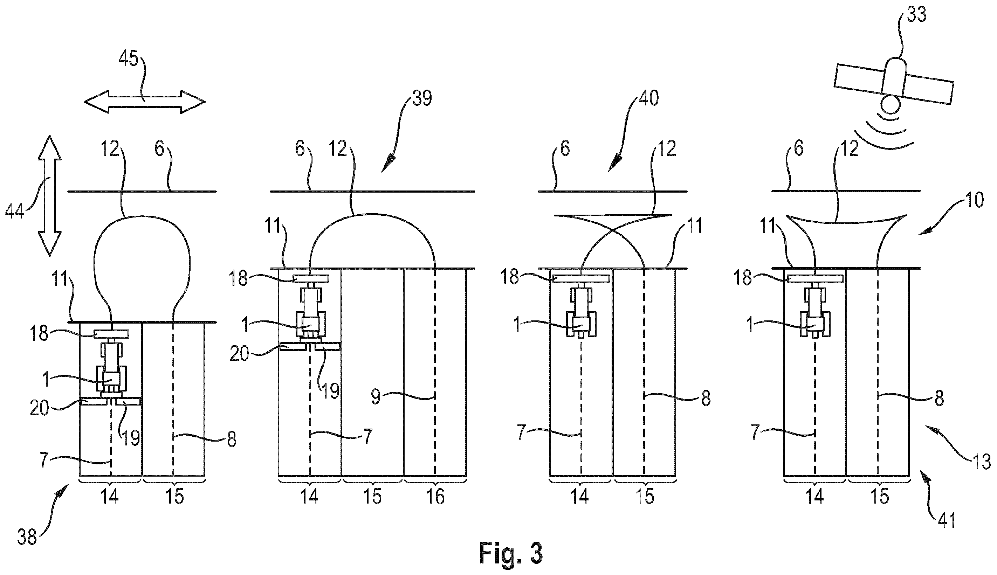

In der Fig. 3 sind beispielhaft mehrere verschiedene Vorgewendesituationen 38, 39, 40, 41 vergleichend dargestellt. Eine Längsachse 44 und Querachse 45 sind senkrecht und/oder orthogonal zueinander angeordnet, wobei die Längsachse 44 parallel zur jeder Fahrspur 7 ausgerichtet ist, während der Querachse 45 jeweils parallel zur Feldgrenze 6 ausgerichtet ist.

Die erste Vorgewendesituation 38 betrifft eine landwirtschaftliche Arbeitsmaschine 1, die ein frontseitiges Anbaugerät 18 und zwei heckseitige Anbaugeräte 19, 20 aufweist, um die während einer Fahrt entlang der Fahrspur 7 und der weiteren nächstliegenden Fahrspur 8 die Teile 14 und 15 des Feldbereiches 13 landwirtschaftlich zu Bearbeiten. Die die Einstellvorrichtung 3 hat in diesem Fall eine optimale Ω-förmige Vorgewendefahrspur 12 ermittelt.

Die zweite Vorgewendesituation 39 betrifft eine landwirtschaftliche Arbeitsmaschine 1, die ein frontseitiges Anbaugerät 18 und zwei heckseitige Anbaugeräte 19, 20 aufweist, um die während einer Fahrt entlang der Fahrspur 7 und der weiteren nicht nächstliegenden Fahrspur 9 die Teile 14 und 16 des Feldbereiches 13 landwirtschaftlich zu Bearbeiten. Die die Einstellvorrichtung 3 hat in diesem Fall eine optimale U-förmige Vorgewendefahrspur 12 ermittelt.

Die dritte Vorgewendesituation 40 betrifft eine landwirtschaftliche Arbeitsmaschine 1, die zwar ein frontseitiges Anbaugerät 18 jedoch kein heckseitiges Anbaugerät aufweist, um die während einer Fahrt entlang der Fahrspur 7 und der weiteren nächstliegenden Fahrspur 8 die Teile 14 und 15 des Feldbereiches 13 landwirtschaftlich zu Bearbeiten. Die die Einstellvorrichtung 3 hat in diesem Fall eine optimale Y-förmige Vorgewendefahrspur 12 ermittelt.

Die vierte Vorgewendesituation 41 betrifft eine landwirtschaftliche Arbeitsmaschine 1, die zwar ein frontseitiges Anbaugerät 18 jedoch kein heckseitiges Anbaugerät aufweist, um die während einer Fahrt entlang der Fahrspur 7 und der weiteren nächstliegenden Fahrspur 8 die Teile 14 und 15 des Feldbereiches 13 landwirtschaftlich zu Bearbeiten. Die die Einstellvorrichtung 3 hat in diesem Fall eine optimale K-förmige Vorgewendefahrspur 12 ermittelt.

Es ist in der Fig. 3 klar erkennbar, dass die Vorgewendefahrspur 12 und die Fläche des Vorgewendebereiches 10 zwischen der Feldgrenze 6 und der Zwischengrenze 11 in den Vorgewendesituation 38, 38 und 40 vollständig unterschiedlich ausgebildet ist. Die Vorgewendesituationen 40 und 41 weisen zwar einen identischen großen Vorgewendebereich 10 auf, jedoch ist die Art und die Länge der Vorgewendefahrspuren 12 unterschiedlich.

Die Einstellvorrichtung 3 kann dazu vorgesehen und eingerichtet sein, die interne Benutzerschnittstelle 24 derart einzustellen, dass dem Fahrer 23 zusätzlich zur Auswahlmöglichkeit der mehreren Vorgewendefahrspuren 12 jeweils eine zusätzliche Information bezüglich dieser auswählbaren Vorgewendefahrspuren 12 darstellt wird. Diese zusätzlichen Informationen können sich auf die Flächengröße des Vorgewendebereiches 10 und/oder die Länge der Vorgewendefahrspuren 12 beziehen, um dem Fahrer 23 bei der Wahl der optimalen Vorgewendefahrspur 12 zu unterstützen.

### Bezugszeichenliste

- 1: landwirtschaftliche Arbeitsmaschine
- 2: landwirtschaftliches Feld
- 3: Einstellvorrichtung
- 4: Fahrerkabine
- 5: Verbrennungsmotor
- 6: Feldgrenze
- 7: Fahrspur
- 8: weitere nächstliegende Fahrspur
- 9: weitere Fahrspur
- 10: Vorgewendebereich
- 11: Zwischengrenze
- 12: Vorgewendefahrspur
- 13: Feldbereich
- 14: Teil des Feldbereiches
- 15: weiterer nächstliegende Teil des Feldbereiches
- 16: weiterer Teil des Feldbereiches
- 17: Traktor
- 18: fronseitiges Anbaugerät
- 19: Heckseitiges Anbaugerät
- 20: weiteres heckseitiges Anbaugerät
- 21: Fronthubwerk
- 22: Heckkopplung
- 23: Fahrer
- 24: interne Benutzerschnittstelle
- 25: internes Display
- 26: interner Datenspeicher
- 27: Erntegutinformationen
- 28: Wetterinformationen
- 29: Standortinformationen
- 30: Feldinformationen
- 31: Arbeitsmaschinenparameter
- 32: Betriebszustände
- 33: Satellit
- 34: externe Benutzerschnittstelle
- 35: externes Display
- 36: externer Datenspeicher
- 37: weiterer externer Datenspeicher
- 38: Erste Vorgewendesituation
- 39: Zweite Vorgewendesituation
- 40: Dritte Vorgewendesituation
- 41: Vierte Vorgewendesituation
- 42: Landwirt
- 43: Lenkvorrichtung
- 44: Längsachse
- 45: Querachse
- 46: Datensatz
- 47: Vorwärtsfahrtrichtung

## Patentansprüche

1. Landwirtschaftliche Arbeitsmaschine (1) zum landwirtschaftlichen Einsatz auf einem landwirtschaftlichen Feld (2), welches einen Feldbereich (13) und einen Vorgewendebereich (10) aufweist,
- mit wenigstens einem Anbaugerät (18, 19, 20) zur Bearbeitung des Feldbereiches (13) des landwirtschaftlichen Feldes (2),
- mit einer innerhalb der landwirtschaftlichen Arbeitsmaschine (1) angeordneten Einstellvorrichtung (3), die dazu vorgesehen und eingerichtet ist, die landwirtschaftliche Arbeitsmaschine (1) in Abhängigkeit messtechnisch erfasster Betriebsparameter und satellitenbasierten Positionsinformationen derart einzustellen, dass die landwirtschaftliche Arbeitsmaschine (1) innerhalb des Feldbereiches (13) mehrere Fahrspuren (7, 8, 9) abfährt, wobei zwei dieser Fahrspuren (7, 8, 9) jeweils mittels einer zu ermittelnden Vorgewendefahrspur (12) innerhalb des Vorgewendebereiches (10) miteinander verbindbar sind,
**dadurch gekennzeichnet,**
- **dass** eine vorgegebene Positionierung des Vorgewendebereiches (10) innerhalb des landwirtschaftlichen Feldes (2), vorgegebene Abmessungen dieses Vorgewendebereiches (10), vorgegebene Fahrspuren (7, 8, 9) innerhalb des Feldbereiches (13) und Arbeitsmaschinenparameter bezüglich des Anbaugeräts (18, 19, 20) datentechnisch in der Einstellvorrichtung (3) hinterlegt sind,
- wobei die Einstellvorrichtung (3) dazu vorgesehen und eingerichtet ist, wenigstens eine Vorgewendefahrspur (12) in Abhängigkeit der messtechnisch erfassten Betriebsparameter, der satellitenbasierten Positionsinformationen, dem Arbeitsmaschinenparameter bezüglich des Anbaugeräts (18, 19, 20), der vorgegebenen Fahrspuren (7, 8, 9), der vorgegebenen Positionierung und vorgegebenen Abmessungen des Vorgewendebereiches (10) zu ermitteln und die landwirtschaftliche Arbeitsmaschine (1) basierend auf der ermittelten Vorgewendefahrspur (12) einzustellen.

2. Landwirtschaftliche Arbeitsmaschine (1) nach Anspruch 1,
**dadurch gekennzeichnet,**
- **dass** der Arbeitsmaschinenparameter bezüglich des Anbaugeräts (18, 19, 20) die Anzahl der Anbaugeräte (18, 19, 20) der landwirtschaftlichen Arbeitsmaschine (1) aufweist, und/oder
- **dass** der Arbeitsmaschinenparameter bezüglich des Anbaugeräts (18, 19, 20) die Art und/oder die Ausgestaltung des Anbaugeräts (18, 19, 20) der landwirtschaftlichen Arbeitsmaschine (1) aufweist.

3. Landwirtschaftliche Arbeitsmaschine (1) nach Anspruch 1 oder 2,
**dadurch gekennzeichnet,**
- **dass** der Arbeitsmaschinenparameter bezüglich des Anbaugeräts (18, 19, 20) aufweist, ob das Anbaugerät (18, 19, 20) ein fronseitiges Anbaugerät (18) oder ein heckseitiges Anbaugerät (19, 20) ist,
- wobei die Einstellvorrichtung (3) dazu vorgesehen und eingerichtet ist, falls die landwirtschaftliche Arbeitsmaschine (1) gemäß dem Arbeitsmaschinenparameter wenigstens ein heckseitiges Anbaugerät (19, 20) aufweist, dass bei der Ermittlung der Vorgewendefahrspur (12) lediglich Vorgewendefahrspuren (12) betrachtet werden, die ausschließlich ein Vorwärtsfahren der landwirtschaftlichen Arbeitsmaschine (1) aufweisen.

4. Landwirtschaftliche Arbeitsmaschine (1) nach einem der vorhergehenden Ansprüche, **dadurch gekennzeichnet,**
- **dass** die landwirtschaftliche Arbeitsmaschine (1) eine Fahrerkabine (4) für einen Fahrer (23) der landwirtschaftlichen Arbeitsmaschine (1) aufweist,
- wobei in der Fahrerkabine (4) eine interne Benutzerschnittstelle (24) derart ausgebildet ist, dass der Fahrer (23) eine beliebige Vorgewendefahrspur (12) einstellen kann,
- wobei die Einstellvorrichtung (3) dazu vorgesehen und eingerichtet ist, die interne Benutzerschnittstelle (24) derart einzustellen, dass dem Fahrer (23) die ermittelte Vorgewendefahrspur (12) zur Auswahl dargestellt wird.

5. Landwirtschaftliche Arbeitsmaschine (1) nach einem der vorhergehenden Ansprüche,
**dadurch gekennzeichnet,**
**dass** die Einstellvorrichtung (3) dazu vorgesehen und eingerichtet ist, die interne Benutzerschnittstelle (24) derart einzustellen, dass dem Fahrer (23) mehrere ermittelte Vorgewendefahrspuren (12) zur Auswahl dargestellt werden.

6. Landwirtschaftliche Arbeitsmaschine (1) nach Anspruch 4 oder 5,
**dadurch gekennzeichnet,**
- **dass** die in der Fahrerkabine (4) interne Benutzerschnittstelle (24) derart ausgebildet ist, dass der Fahrer (23) einen beliebigen Vorgewendebereiches (10) innerhalb des landwirtschaftlichen Feldes (2) und beliebige Abmessungen dieses Vorgewendebereiches (10) bezüglich des landwirtschaftlichen Feldes (2) einstellen kann,
- wobei die Einstellvorrichtung (3) dazu vorgesehen und eingerichtet ist, die interne Benutzerschnittstelle (24) derart einzustellen, dass dem Fahrer (23) die vorgegebene Positionierung des Vorgewendebereiches (10) innerhalb des landwirtschaftlichen Feldes (2) und die vorgegebenen Abmessungen dieses Vorgewendebereiches (10) zur Auswahl dargestellt wird.

7. Landwirtschaftliche Arbeitsmaschine (1) nach einem der Ansprüche 4 bis 6,
**dadurch gekennzeichnet,**
**dass** die Einstellvorrichtung (3) dazu vorgesehen und eingerichtet ist, die vor einer Abschaltung der landwirtschaftlichen Arbeitsmaschine (1) zuletzt verwendete Vorgewendefahrspur (12) datentechnisch zu speichern und bei einem Einschalten der landwirtschaftlichen Arbeitsmaschine (1) die interne Benutzerschnittstelle (24) derart einzustellen, dass dem Fahrer (23) zusätzlich zu einer ermittelten Vorgewendefahrspur (12) die zuletzt verwendete Vorgewendefahrspur (12) zur Auswahl dargestellt wird.

8. Landwirtschaftliche Arbeitsmaschine (1) nach einem der Ansprüche 4 bis 7,
**dadurch gekennzeichnet,**
**dass** die Einstellvorrichtung (3) dazu vorgesehen und eingerichtet ist, die interne Benutzerschnittstelle (24) derart einzustellen, dass dem Fahrer (23) zusätzlich zu der Auswahl der mehreren Vorgewendefahrspuren (12) jeweils eine zusätzliche Information bezüglich der auswählbaren Vorgewendefahrspur (12) darstellt wird.

9. Landwirtschaftliche Arbeitsmaschine (1) nach Anspruch 8,
**dadurch gekennzeichnet,**
**dass** die zusätzliche Information bezüglich der Vorgewendefahrspuren (12) die Flächengröße des Vorgewendebereiches (10) und/oder die Länge der Vorgewendefahrspuren (12) betrifft.

10. Landwirtschaftliche Arbeitsmaschine (1) nach einem der vorhergehenden Ansprüche,
**dadurch gekennzeichnet,**
- **dass** die landwirtschaftliche Arbeitsmaschine (1) eine externe Benutzerschnittstelle (34) außerhalb der landwirtschaftlichen Arbeitsmaschine (1) für einen Landwirt (42) aufweist,
- wobei die Einstellvorrichtung (3) dazu vorgesehen und eingerichtet ist, die externe Benutzerschnittstelle (34) derart einzustellen, dass dem Landwirt (42) ein Hinweis dargestellt wird, falls eine von der Einstellvorrichtung (3) ermittelte Vorgewendefahrspur (12) nicht verwendet wird und der Fahrer (23) eine andere Vorgewendefahrspur (12) einstellt.

11. Landwirtschaftliche Arbeitsmaschine (1) nach einem der vorhergehenden Ansprüche,
**dadurch gekennzeichnet,**
- **dass** die ermittelte Vorgewendefahrspur (12) eine Ω-förmige Vorgewendefahrspur (12) ausbildet, und/oder
- **dass** die ermittelte Vorgewendefahrspur (12) eine U-förmige Vorgewendefahrspur (12) ausbildet, und/oder
- **dass** die ermittelte Vorgewendefahrspur (12) eine Y-förmige Vorgewendefahrspur (12) ausbildet, und/oder
- **dass** die ermittelte Vorgewendefahrspur (12) eine K-förmige Vorgewendefahrspur (12) ausbildet.

12. Landwirtschaftliche Arbeitsmaschine (1) nach einem der vorhergehenden Ansprüche,
**dadurch gekennzeichnet,**
**dass** der messtechnisch erfasste Betriebsparameter eine Erntegutinformation (27), eine Wetterinformation (28), eine Standortinformation (29), einen weiteren Arbeitsmaschinenparameter (31) und/oder einen Betriebszustand (32) der landwirtschaftlichen Arbeitsmaschine (1) betrifft.

13. Landwirtschaftliche Arbeitsmaschine (1) nach einem der vorhergehenden Ansprüche,
**dadurch gekennzeichnet,**
**dass** die Einstellvorrichtung (3) dazu vorgesehen und eingerichtet ist, in Abhängigkeit der ermitteln Vorgewendefahrspur (12) wenigstens ein Anbaugerät (18, 19, 20) einzustellen.

14. Landwirtschaftliche Arbeitsmaschine (1) nach einem der vorhergehenden Ansprüche,
**dadurch gekennzeichnet,**
**dass** die Einstellvorrichtung (3) dazu vorgesehen und eingerichtet ist, in Abhängigkeit der ermitteln Vorgewendefahrspur (12) wenigstens ein frontseitiges Anbaugerät (18) und/oder ein heckseitiges Anbaugerät (19, 20) einzustellen.

15. Landwirtschaftliche Arbeitsmaschine (1) nach einem der vorhergehenden Ansprüche,
**dadurch gekennzeichnet,**
- **dass** die Einstellvorrichtung (3) dazu vorgesehen und eingerichtet ist, in Abhängigkeit der ermitteln Vorgewendefahrspur (12) wenigstens ein Anbaugerät (18, 19, 20) teilweise, insbesondere teilweise asynchron, einzustellen, und/oder
- **dass** die Einstellvorrichtung (3) dazu vorgesehen und eingerichtet ist, in Abhängigkeit der ermitteln Vorgewendefahrspur (12) wenigstens ein frontseitiges Anbaugerät (18) asynchron zu einem heckseitigen Anbaugerät (19, 20) einzustellen.

## Claims

1. Agricultural work machine (1) for agricultural use in an agricultural field (2) that has a field region (13) and a headland region (10),
- having at least one attachment (18, 19, 20) for working the field region (13) of the agricultural field (2),
- having an adjustment device (3) which is arranged within the agricultural work machine (1) and is provided and configured to adjust the agricultural work machine (1) on the basis of metrologically recorded operating parameters and satellite-based position information in such a way that the agricultural work machine (1) travels along multiple lanes (7, 8, 9) within the field region (13), wherein two of these lanes (7, 8, 9) can be connected to each other by means of a headland lane (12) to be determined within the headland region (10),
**characterized**
- **in that** predefined positioning of the headland region (10) within the agricultural field (2), predefined dimensions of this headland region (10), predefined lanes (7, 8, 9) within the field region (13) and work machine parameters with respect to the attachment (18, 19, 20) are stored in the adjustment device (3) using data technology,
- wherein the adjustment device (3) is provided and configured to determine at least one headland lane (12) on the basis of the metrologically recorded operating parameters, the satellite-based position information, the work machine parameters with respect to the attachment (18, 19, 20), the predefined lanes (7, 8, 9), the predefined positioning and predefined dimensions of the headland region (10) and to adjust the agricultural work machine (1) based on the determined headland lane (12).

2. Agricultural work machine (1) according to Claim 1,
**characterized**
- **in that** the work machine parameter with respect to the attachment (18, 19, 20) comprises the number of attachments (18, 19, 20) of the agricultural work machine (1), and/or
- **in that** the work machine parameter with respect to the attachment (18, 19, 20) comprises the type and/or design of the attachment (18, 19, 20) of the agricultural work machine (1).

3. Agricultural work machine (1) according to Claim 1 or 2,
**characterized**
- **in that** the work machine parameter with respect to the attachment (18, 19, 20) comprises whether the attachment (18, 19, 20) is a front attachment (18) or a rear attachment (19, 20),
- wherein the adjustment device (3) is provided and configured, if the agricultural work machine (1) has at least one rear attachment (19, 20) according to the work machine parameter, such that, when determining the headland lane (12), only headland lanes (12) which have only forward travel of the agricultural work machine (1) are considered.

4. Agricultural work machine (1) according to one of the preceding claims,
**characterized**
- **in that** the agricultural work machine (1) has a driver's cab (4) for a driver (23) of the agricultural work machine (1),
- wherein an internal user interface (24) is formed in the driver's cab (4) such that the driver (23) can set any headland lane (12),
- wherein the adjustment device (3) is provided and configured to adjust the internal user interface (24) such that the determined headland lane (12) is shown to the driver (23) for selection.

5. Agricultural work machine (1) according to one of the preceding claims,
**characterized**
**in that** the adjustment device (3) is provided and configured to adjust the internal user interface (24) such that multiple determined headland lanes (12) are shown to the driver (23) for selection.

6. Agricultural work machine (1) according to Claim 4 or 5,
**characterized**
- **in that** the internal user interface (24) in the driver's cab (4) is designed in such a way that the driver (23) can set any headland region (10) within the agricultural field (2) and any dimensions of this headland region (10) with respect to the agricultural field (2),
- wherein the adjustment device (3) is provided and configured to adjust the internal user interface (24) such that the driver (23) is shown the predefined positioning of the headland region (10) within the agricultural field (2) and the predefined dimensions of this headland region (10) for selection.

7. Agricultural work machine (1) according to one of Claims 4 to 6,
**characterized**
**in that** the adjustment device (3) is provided and configured to store the headland lane (12) used last before the agricultural work machine (1) is switched off using data technology and, when the agricultural work machine (1) is switched on, to adjust the internal user interface (24) such that, in addition to a determined headland lane (12), the driver (23) is shown the headland lane (12) used last for selection.

8. Agricultural work machine (1) according to one of Claims 4 to 7,
**characterized**
**in that** the adjustment device (3) is provided and configured to adjust the internal user interface (24) such that, in addition to the selection of the multiple headland lanes (12), the driver (23) is respectively shown additional information regarding the selectable headland lane (12).

9. Agricultural work machine (1) according to Claim 8,
**characterized**
**in that** the additional information regarding the headland lanes (12) relates to the area size of the headland region (10) and/or the length of the headland lanes (12).

10. Agricultural work machine (1) according to one of the preceding claims,
**characterized**
- **in that** the agricultural work machine (1) has an external user interface (34) outside the agricultural work machine (1) for a farmer (42),
- wherein the adjustment device (3) is provided and configured to adjust the external user interface (34) such that the farmer (42) is shown an indication if a headland lane (12) determined by the adjustment device (3) is not used and the driver (23) sets a different headland lane (12).

11. Agricultural work machine (1) according to one of the preceding claims,
**characterized**
- **in that** the determined headland lane (12) forms an Ω-shaped headland lane (12), and/or
- **in that** the determined headland lane (12) forms a U-shaped headland lane (12), and/or
- **in that** the determined headland lane (12) forms a Y-shaped headland lane (12), and/or
- **in that** the determined headland lane (12) forms a K-shaped headland lane (12).

12. Agricultural work machine (1) according to one of the preceding claims,
**characterized**
**in that** the metrologically recorded operating parameter concerns crop information (27), weather information (28), location information (29), a further work machine parameter (31) and/or an operating state (32) of the agricultural work machine (1).

13. Agricultural work machine (1) according to one of the preceding claims,
**characterized**
**in that** the adjustment device (3) is provided and configured to adjust at least one attachment (18, 19, 20) on the basis of the determined headland lane (12).

14. Agricultural work machine (1) according to one of the preceding claims,
**characterized**
**in that** the adjustment device (3) is provided and configured to adjust at least one front attachment (18) and/or one rear attachment (19, 20) on the basis of the determined headland lane (12).

15. Agricultural work machine (1) according to one of the preceding claims,
**characterized**
- **in that** the adjustment device (3) is provided and configured to adjust at least one attachment (18, 19, 20) partially, in particular partially asynchronously, on the basis of the determined headland lane (12), and/or
- **in that** the adjustment device (3) is provided and configured to adjust at least one front attachment (18) asynchronously to a rear attachment (19, 20) on the basis of the determined headland lane (12).

## Revendications

1. Machine agricole (1) destinée à une utilisation agricole dans un champ agricole (2) qui présente une zone de champ (13) et une zone de tournière (10),
- comprenant au moins un outil attelé (18, 19, 20) destiné au travail de la zone de champ (13) du champ agricole (2),
- comprenant un dispositif de réglage (3) qui est installé à l'intérieur de la machine agricole (1) et est prévu et conçu pour régler la machine agricole (1) en fonction de paramètres de fonctionnement, recueillis avec des techniques de mesure, et d'informations de position basées sur satellite, de manière à ce que la machine agricole (1) parcoure plusieurs voies de passage (7, 8, 9) à l'intérieur de la zone de champ (13), deux de ces voies de passage (7, 8, 9) pouvant être reliées l'une à l'autre, respectivement par une voie de passage de tournière (12) à déterminer à l'intérieur de la zone de tournière (10),
**caractérisée en ce que**
- un positionnement prédéfini de la zone de tournière (10) à l'intérieur du champ agricole (2), des dimensions prédéfinies de cette zone de tournière (10), des voies de passage (7, 8, 9) prédéfinies à l'intérieur de la zone de champ (13) et des paramètres de machine de travail relatifs à l'outil attelé (18, 19, 20) sont enregistrés du point de vue informatique dans le dispositif de réglage (3),
- le dispositif de réglage (3) étant prévu et conçu pour déterminer au moins une voie de passage de tournière (12) en fonction des paramètres de fonctionnement recueillis avec des techniques de mesure, des informations de position basées sur satellite, du paramètre de machine de travail relatif à l'outil attelé (18, 19, 20), des voies de passage (7, 8, 9) prédéfinies, du positionnement prédéfini et des dimensions prédéfinies de la zone de tournière (10), et pour régler la machine agricole (1) sur la base de la voie de passage de tournière (12) déterminée.

2. Machine agricole (1) selon la revendication 1,
**caractérisée en ce que**
- le paramètre de machine de travail relatif à l'outil attelé (18, 19, 20) comporte le nombre d'outils attelés (18, 19, 20) de la machine agricole (1), et/ou
- **en ce que** le paramètre de machine de travail relatif à l'outil attelé (18, 19, 20) comporte le type et/ou la configuration de l'outil attelé (18, 19, 20) de la machine agricole (1).

3. Machine agricole (1) selon la revendication 1 ou 2,
**caractérisée en ce que**
- le paramètre de machine de travail relatif à l'outil attelé (18, 19, 20) indique si l'outil attelé (18, 19, 20) est un outil attelé frontal (18) ou un outil attelé arrière (19, 20),
- le dispositif de réglage (3) étant prévu et conçu pour que, dans le cas où la machine agricole (1) présente au moins un outil attelé arrière (19, 20) selon le paramètre de machine de travail, lors de la détermination de la voie de passage de tournière (12), seules soient considérées des voies de passage de tournière (12) qui impliquent uniquement une marche avant de la machine agricole (1).

4. Machine agricole (1) selon une des revendications précédentes,
**caractérisée en ce que**
- la machine agricole (1) comporte une cabine de conduite (4) pour un conducteur (23) de la machine agricole (1),
- une interface utilisateur interne (24) dans la cabine de conduite (4) étant réalisée de manière à ce que le conducteur (23) puisse régler n'importe quelle voie de passage de tournière (12),
- le dispositif de réglage (3) étant prévu et conçu pour régler l'interface utilisateur interne (24) de manière à ce que la voie de passage de tournière (12) déterminée soit présentée au conducteur (23) en vue d'une sélection.

5. Machine agricole (1) selon une des revendications précédentes,
**caractérisée en ce que**
le dispositif de réglage (3) est prévu et conçu pour régler l'interface utilisateur interne (24) de manière à ce que plusieurs voies de passage de tournière (12) déterminées soient présentées au conducteur (23) en vue d'une sélection.

6. Machine agricole (1) selon la revendication 4 ou 5,
**caractérisée en ce que**
- l'interface utilisateur interne (24) dans la cabine de conduite (4) est réalisée de manière à ce que le conducteur (23) puisse régler n'importe quelle zone de tournière (10) à l'intérieur du champ agricole (2) et n'importe quelles dimensions pour cette zone de tournière (10) par rapport au champ agricole (2),
- le dispositif de réglage (3) étant prévu et conçu pour régler l'interface utilisateur interne (24) de manière à ce que le positionnement prédéfini de la zone de tournière (10) à l'intérieur du champ agricole (2) et les dimensions prédéfinies de cette zone de tournière (10) soient présentés au conducteur (23) en vue d'une sélection.

7. Machine agricole (1) selon une des revendications 4 à 6,
**caractérisée en ce que**
le dispositif de réglage (3) est prévu et conçu pour enregistrer sur le plan informatique la dernière voie de passage de tournière (12) utilisée avant un arrêt de la machine agricole (1), et pour régler, lors d'une mise en marche de la machine agricole (1), l'interface utilisateur interne (24) de manière à ce que, en plus d'une voie de passage de tournière (12) déterminée, la dernière voie de passage de tournière (12) utilisée soit présentée au conducteur (23) en vue d'une sélection.

8. Machine agricole (1) selon une des revendications 4 à 7,
**caractérisée en ce que**
le dispositif de réglage (3) est prévu et conçu pour régler l'interface utilisateur interne (24) de manière à ce que, en plus de la sélection de la pluralité de voies de passage de tournière (12), respectivement une information supplémentaire concernant la voie de passage de tournière (12) pouvant être sélectionnée est représentée au conducteur (23).

9. Machine agricole (1) selon la revendication 8,
**caractérisée en ce que**
l'information supplémentaire relative aux voies de passage de tournière (12) concerne la dimension de la surface de la zone de tournière (10) et/ou la longueur des voies de passage de tournière (12).

10. Machine agricole (1) selon une des revendications précédentes,
**caractérisée en ce que**
- la machine agricole (1) comprend une interface utilisateur externe (34) située à l'extérieur de la machine agricole (1) et destinée à un agriculteur (42),
- le dispositif de réglage (3) étant prévu et conçu pour régler l'interface utilisateur externe (34) de manière à fournir une indication à l'agriculteur (42), dans le cas où une voie de passage de tournière (12) déterminée par le dispositif de réglage (3) n'est pas utilisée et le conducteur (23) règle une autre voie de passage de tournière (12).

11. Machine agricole (1) selon une des revendications précédentes,
**caractérisée en ce que**
- la voie de passage de tournière (12) déterminée représente une voie de passage de tournière (12) en forme de Ω, et/ou
- **en ce que** la voie de passage de tournière (12) déterminée représente une voie de passage de tournière (12) en forme de U, et/ou
- **en ce que** la voie de passage de tournière (12) déterminée représente une voie de passage de tournière (12) en forme de Y, et/ou
- **en ce que** la voie de passage de tournière (12) déterminée représente une voie de passage de tournière (12) en forme de K.

12. Machine agricole (1) selon une des revendications précédentes,
**caractérisée en ce que**
le paramètre de fonctionnement recueilli par des techniques de mesure concerne une information de récolte (27), une information météorologique (28), une information de localisation (29), un paramètre de machine de travail supplémentaire (31) et/ou un état de fonctionnement (32) de la machine agricole (1).

13. Machine agricole (1) selon une des revendications précédentes,
**caractérisée en ce que**
le dispositif de réglage (3) est prévu et conçu pour régler au moins un outil attelé (18, 19, 20) en fonction de la voie de passage de tournière (12) déterminée.

14. Machine agricole (1) selon une des revendications précédentes,
**caractérisée en ce que**
le dispositif de réglage (3) est prévu et conçu pour régler au moins un outil attelé frontal (18) et/ou un outil attelé arrière (19, 20) en fonction de la voie de passage de tournière (12) déterminée.

15. Machine agricole (1) selon une des revendications précédentes,
**caractérisée en ce que**
- le dispositif de réglage (3) est prévu et conçu pour régler en partie, notamment en partie de manière asynchrone, au moins un outil attelé (18, 19, 20), en fonction de la voie de passage de tournière (12) déterminée, et/ou
- **en ce que** le dispositif de réglage (3) est prévu et conçu pour régler au moins un outil attelé frontal (18) de manière asynchrone par rapport à un outil attelé arrière (19, 20), en fonction de la voie de passage de tournière (12) déterminée.
